# EUROPEAN PATENT APPLICATION

(11) **EP 4 685 016 A1**
(43) Date of publication of application: **28.01.2026**
(21) Application number: 25191857.9
(22) Date of filing: 25.07.2025
(51) Int. Cl.: B60R 13/02, B60K 37/20, B32B 3/30, B32B 5/02

(54) **INTERIOR PANEL FOR A VEHICLE**

(30) Priority: 26.07.2024 GB 202410993
(71) Applicant: McLaren Automotive Limited, Woking, Surrey GU21 4YH (GB)
(72) Inventor: Lewis, Joanna Kay, Loxwood, GU21 4YH (GB)
(74) Representative: Slingsby Partners LLP

(57) **Abstract**

An interior panel (201, 401, 501, 701) for a vehicle (101), the interior panel comprising: a support panel (202, 304, 402, 502, 702); and a knitted fabric (208, 218, 309, 406, 504, 706) covering at least part of the support panel, the knitted fabric comprising a region of surface-relief (505, 709) comprising areas of elevated stitching (506) and areas of depressed stitching (507) such that when the knitted fabric is viewed from a first direction (510), the one or more areas of depressed stitching are obscured by the one or more areas of elevated stitching and when viewed from a second direction (511), the one or more areas of depressed stitching are visible.

## Description

This invention relates to an interior panel for a vehicle.

Motor vehicles generally comprise a number of interior panels located throughout an occupant cabin of the vehicle. In particular, motor vehicles generally comprise an interior fascia panel, or dashboard, located in advance of the driver. Motor vehicles also generally comprise interior panels on the doors of the vehicle, typically referred to as door cards. These interior panels typically house a number of instruments and controls relating to the vehicle's operation, for example speedometers and digital displays. These interior panels also often comprise a number of components designed to enhance the experience of the users of the vehicle such as speakers, lights and air conditioning units. These interior panels also need to conform to certain safety standards, thus ensuring that they do not diminish the overall safety of the vehicle.

In high-performance, luxury vehicles in particular, it is also important that the appearance of these interior panels is in line with the appearance of the remainder of the vehicle. That is, the interior panels need to appear attractive and well-designed. As a result, these interior panels are often decorated with textiles to create a luxury aesthetic. Traditionally, these textiles are made using 2D roll goods and are often cut and sewn to the required shape. These traditional techniques are associated with a large amount of waste in the form of offcuts and result in unsightly seams where two pieces of fabric meet.

There is therefore a need for an interior component for use in a motor vehicle which better meets both the safety and aesthetic requirements considered above.

According to a first aspect, the present invention relates to an interior panel for a vehicle, the interior panel comprising: a support panel comprising a surface and one or more apertures in the surface; and a knitted fabric covering at least part of the support panel, the knitted fabric comprising: a first stitch density in a first location, the first location overlaying the surface of the interior panel; and a second stitch density in a second location, the second location overlaying the one or more apertures in the surface of the support panel.

The first stitch density may be higher than the second stitch density.

The knitted fabric may be more porous in the first location than in the second location.

The knitted fabric may comprise a transition between the first stitch density and the second stitch density, and the transition in stitch density may be gradual.

The knitted fabric may comprise a transition between the first stitch density and the second stitch density, and the transition in stitch density may be direct.

The surface may be configured to face towards an occupant cabin of a vehicle.

The knitted fabric may be attached to the support panel.

The knitted fabric may be attached to the support panel around a periphery of the surface.

The one or more apertures of the interior panel may be configured to house one or more components.

The one or more components may be speakers.

The one or more components may be attached to the interior panel.

The interior panel may be a vehicle dashboard.

The interior panel may be an interior panel for a door of the vehicle.

The knitted fabric may be made of a single piece.

The knitted fabric may be a 3D knitted fabric.

According to a second aspect, the present invention relates to an interior panel for a vehicle, the interior panel comprising: a support panel; and a knitted fabric covering at least part of the support panel, the knitted fabric comprising a region of surface-relief comprising areas of elevated stitching and areas of depressed stitching such that when the knitted fabric is viewed from a first direction, the one or more areas of depressed stitching are obscured by the one or more areas of elevated stitching and when viewed from a second direction, the one or more areas of depressed stitching are visible.

The vehicle may comprise an occupant cabin and the interior panel may be configured to be located inside the vehicle cabin.

The vehicle may comprise an occupant cabin, the interior panel may be configured to be located inside the vehicle cabin, and the first direction may be along a longitudinal direction of the vehicle.

The vehicle may comprise an occupant cabin and a driver seat, the interior panel may be configured to be located inside the vehicle cabin, and the first direction may be along a longitudinal direction of the vehicle centred on the driver seat.

The first direction may be at a viewing angle of less than 30 degrees from the surface of the interior panel.

The vehicle may comprise an occupant cabin, the interior panel may be configured to be located inside the vehicle cabin, and the second direction may be rotated from a longitudinal direction of the vehicle.

The vehicle may comprise an occupant cabin, the interior panel may be configured to be located inside the vehicle cabin, and the second direction may be equivalent to a viewpoint of a person outside the vehicle cabin.

The support panel may comprise a surface that the knitted fabric covers, and the second direction may be at a viewing angle of greater than 30 degrees to the surface of the interior panel.

The depressed stitching of the knitted fabric may be a first colour, and the elevated stitching of the knitted fabric may be a second colour.

The first and second colours may be different.

The interior panel may be a vehicle dashboard.

The knitted fabric may have an anti-glare effect.

The knitted fabric may be made of a single piece.

The knitted fabric may be a 3D knitted fabric.

According to a third aspect, the present invention relates to an interior panel for a vehicle, the interior panel comprising: a support panel comprising a surface and one or more apertures in the surface; a knitted fabric covering at least part of the support panel, the knitted fabric comprising: a first stitch density in a first location, the first location overlaying the surface of the interior panel; and a second stitch density in a second location, the second location overlaying the one or more apertures in the surface of the support panel; and a region of surface-relief comprising areas of elevated stitching and areas of depressed stitching such that when the knitted fabric is viewed from a first direction, the one or more areas of depressed stitching are obscured by the one or more areas of elevated stitching and when viewed from a second direction, the one or more areas of depressed stitching are visible. The first stitch density may be higher than the second stitch density. The knitted fabric may be more porous in the second location than in the first location. The knitted fabric may comprise a transition between the first stitch density and the second stitch density, and the transition in stitch density is gradual. The knitted fabric may comprise a transition between the first stitch density and the second stitch density, and the transition in stitch density is direct. The surface may be configured to face towards an occupant cabin of a vehicle. The knitted fabric may be attached to the support panel. The knitted fabric may be attached to the support panel around a periphery of the surface. The one or more apertures of the interior panel may be configured to house one or more components. The one or more components may be speakers. The one or more components may be attached to the interior panel. The interior panel may be a vehicle dashboard. The knitted fabric may be made of a single piece. The knitted fabric may be a 3D knitted fabric. The vehicle may comprise an occupant cabin and the interior panel is configured to be located inside the vehicle cabin. The vehicle may comprise an occupant cabin, the interior panel is configured to be located inside the vehicle cabin, and the first direction is along a longitudinal direction of the vehicle. The vehicle may comprise an occupant cabin and a driver seat, the interior panel is configured to be located inside the vehicle cabin, and the first direction is along a longitudinal direction of the vehicle centred on the driver seat. The first direction may be at a viewing angle of less than 30 degrees from the surface of the interior panel. The vehicle may comprise an occupant cabin, the interior panel is configured to be located inside the vehicle cabin, and the second direction is rotated from a longitudinal direction of the vehicle. The vehicle may comprise an occupant cabin, the interior panel is configured to be located inside the vehicle cabin, and the second direction is being equivalent to a viewpoint of a person outside the vehicle cabin. The support panel may comprise a surface that the knitted fabric covers, and the second direction being at a viewing angle of greater than 30 degrees to the surface of the interior panel. The depressed stitching of the knitted fabric may be a first colour, and the elevated stitching of the knitted fabric is a second colour. The first and second colours may be different. The knitted fabric may have an anti-glare effect.

The present invention will now be described by way of example with reference to the accompanying drawings. In the drawings:
Figure 1 shows a plan view of a vehicle with the roof not shown.
Figure 2A and 2B show two variations of an interior panel for a vehicle.
Figures 3A and 3B show two variations of a door card for a vehicle.
Figure 4 shows an interior panel for a vehicle comprising a knitted fabric with areas of different stitch densities.
Figure 5 shows a side view of an interior panel for a vehicle comprising a knitted fabric with an area of surface relief.
Figure 6A and 6B show a first and a second view of an interior panel comprising a knitted fabric with an area of surface relief.
Figure 7 shows an interior panel comprising a knitted fabric with areas of different stitch densities and an area of surface relief.

The following description is presented to enable any person skilled in the art to make and use the invention, and is provided in the context of a particular application. Various modifications to the disclosed embodiments will be readily apparent to those skilled in the art.

The general principles defined herein may be applied to other embodiments and applications without departing from the spirit and scope of the present invention. Thus, the present invention is not intended to be limited to the embodiments shown, but is to be accorded the widest scope consistent with the principles and features disclosed herein.

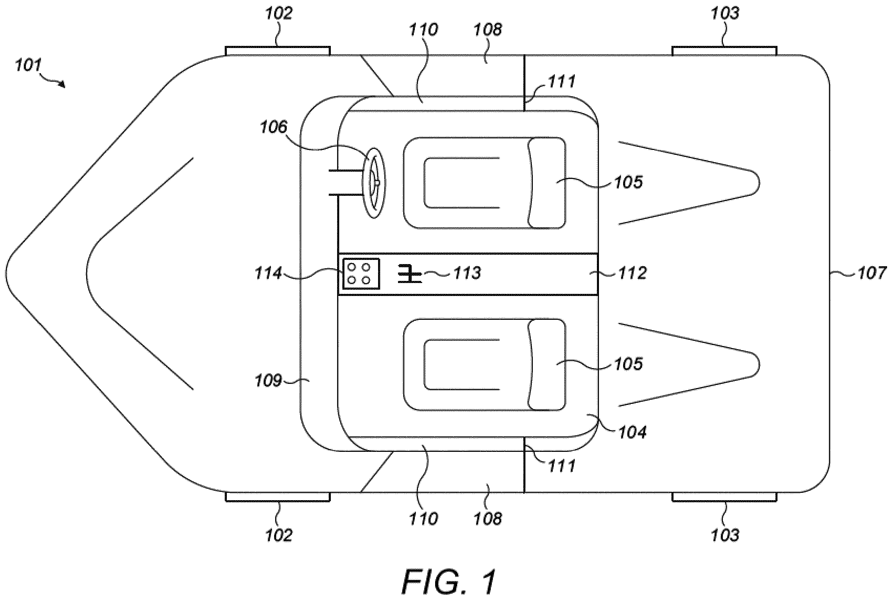

Figure 1 shows a plan view of a vehicle 101 with the roof not shown. The vehicle 101 may be an automobile. The vehicle 101 may be a car. The vehicle 101 comprises front wheels 102 and rear wheels 103. The front of the vehicle is defined with reference to the primary motion direction of the vehicle 101. The front of the vehicle 101 points in the primary motion direction of the vehicle 101. Generally, a vehicle has a primary motion direction that is the forward direction. The vehicle 101 comprises an occupant compartment 104. The occupant compartment 104 may comprises one or more seats 105 for occupants of the vehicle to sit in. Whilst two seats 105 are shown in figure 1 it will be appreciated that more may be included in the vehicle 101. The occupant compartment 104 may accommodate a driver. The occupant compartment may accommodate one or more passengers. The vehicle 101 may comprise controls 106 located within the occupant compartment 104 to enable an occupant to control the motion of the vehicle 101. The vehicle controls 106 may comprise a steering wheel. The occupant compartment 104 may also be known as a passenger compartment.

The vehicle comprises a vehicle body 107. The vehicle body 107 may comprise one or more openings through which an occupant may enter or exit the vehicle 101 or items such as luggage may be introduced to or taken from the vehicle 101. The vehicle 101 may comprise one or more doors 108 to close those openings. As pictured in figure 1, the vehicle 101 comprises two doors 108. It will be appreciated that the vehicle may comprise more or less doors 108 than this.

The vehicle 101 may comprise a roof. The roof may be fixed or it may be removable. The roof may be removable in that it can be stowed inside the vehicle or manually removed and stored elsewhere. The roof is not shown in figure 1 so that the occupant compartment 104 can be viewed. The occupant compartment 104 comprises an interior which forms the surfaces of the occupant compartment. The interior comprises a plurality of interior panels which form the occupant compartment 104. For example, the interior panels may include front facia panels 109, door panels 110, and pillars 111. The front facia panels 109 may run across the front of the interior of the car. The front interior panel 109 may support the vehicle controls 106. The front interior panel 109 could be a fascia panel. The door panels 110 may be mounted on the doors 108. The door panels 110 define the lateral limits of the occupant compartment 104.

The vehicle 101 may comprise a central housing 112. The central housing 112 may house a transmission shaft or gearbox. In many cases, the central housing 112 may support a gear-stick 113 or other controls 114 that may be operated by the driver. The other controls 114 may for example permit the driver to select between more than one set of driving dynamics settings for the vehicle. For instance, a race mode, a sport mode and/or a normal mode.

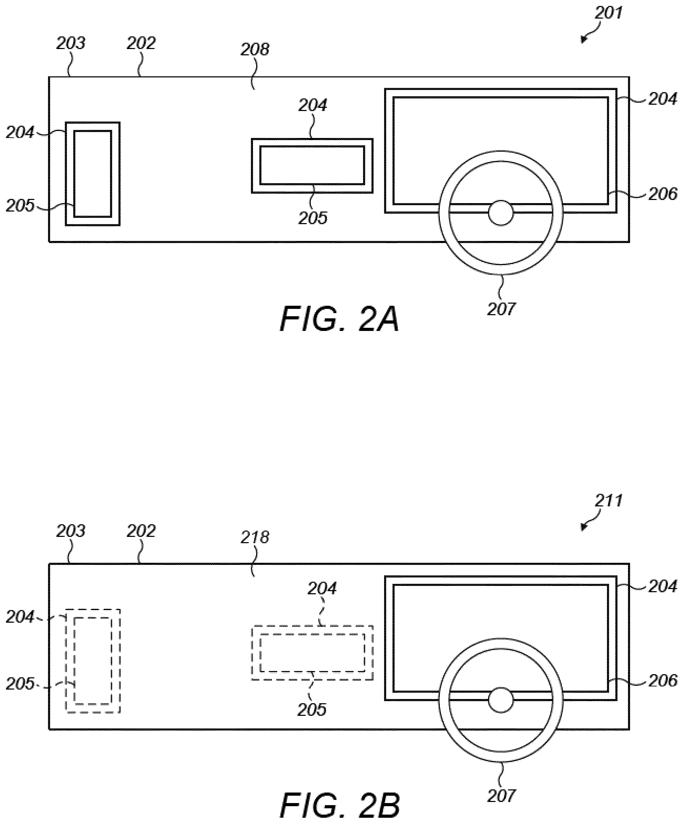

Figure 2A shows an interior panel 201 for a vehicle. The interior panel 201 could be a fascia panel. Interior panel 201 could be a vehicle dashboard. The interior panel 201 may comprise a support panel 202. The support panel 202 may comprise a surface 203. The surface 203 of the support panel 202 may comprise one or more apertures 204. The one or more apertures 204 may be configured to house one or more components 205. The one or more components 205 may be speakers. The one or more components 205 may be lights. The one or more components 205 may be speedometers. The one or more components 205 may be heating, ventilation, or air conditioning (HVAC) components. Interior panel 201 may also comprise a display unit 206. The one or more apertures 204 may be configured to house one or more a display units 206. The display unit 206 may be configured to display information concerning the operation of the vehicle to the driver. The support panel may also support the steering wheel 207. The interior panel 201 may also comprise a textile fabric 208. The textile fabric 208 may be attached to the surface 203. The textile fabric may be attached to the periphery of the surface 203. The textile fabric 208 may be a cloth that has been woven or knitted or tufted or knotted. The textile fabric may have been manufactured using any combination of these methods. The textile fabric may be referred to as a knitted fabric. The textile fabric 208 may be bonded together using natural or synthetic threads, yarns, or any other materials. The textile fabric 208 may terminate at the edges of the one or more apertures 204. The textile fabric 208 may terminate at the edges of the display unit 206.

Figure 2B shows an interior panel 211 for a vehicle. The interior panel 211 is configured in the same way as interior panel 201 illustrated in Figure 2A. However, the textile fabric 218 differs from the textile fabric 208 illustrated in Figure 2A in that textile fabric 218 may not terminate at the edges of the one or more apertures 204.Instead, the textile fabric 218 may overlay the one or more apertures 204. The textile fabric 218 may overlay some of the one or more apertures 204. The textile fabric 218 may thus hide one or more of the one or more apertures 204. The one or more components 205 housed in the one or more apertures 204 may thus also be hidden. The one or more components 205 may thus be seamlessly integrated into the interior panel 211.

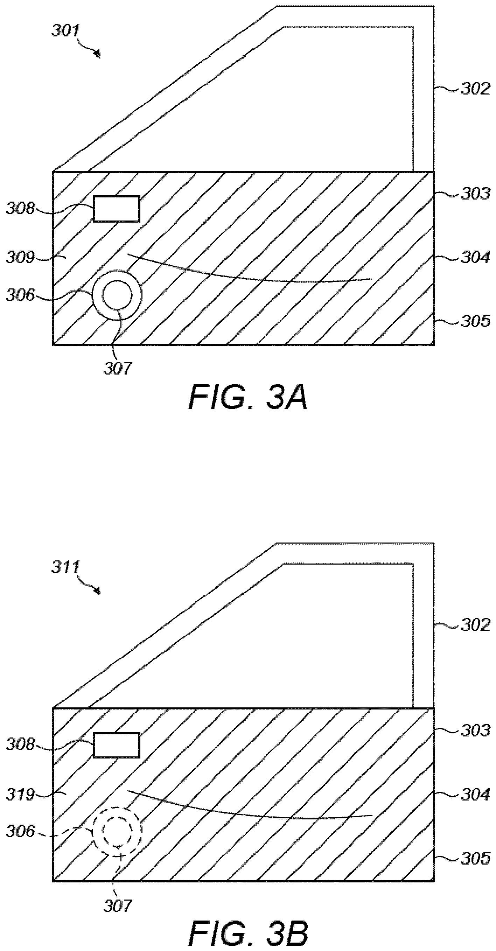

Figure 3A shows a door 301 for a vehicle. The door 301 may comprise a door frame 302. The door 301 may comprise a door card 303. The door card 303 may be attached to the door frame 302. The door card 303 may also be referred to as an interior panel, or an interior panel, for a door of the vehicle. The door card 303 may comprise a support panel 304. The support panel 304 of the door card 303 may be attached to the door frame 302. The support panel 304 may comprise a surface 305. The surface 305 of the support panel 304 may comprise one or more apertures 306. The one or more apertures 306 may be configured to house one or more components 307. The one or more components 307 may be speakers. The one or more components 307 may be lights. The one or more components 307 may be HVAC components. The door card 303 may also comprise a door handle 308. The door card 303 may also comprise a textile fabric 309. The textile fabric 309 may be attached to the surface 305. The textile fabric may be attached to the periphery of the surface 305. The textile fabric 309 may be a cloth that has been woven or knitted or tufted or knotted. The textile fabric may have been manufactured using any combination of these methods. The textile fabric may be referred to as a knitted fabric. The textile fabric 309 may be bonded together using natural or synthetic threads, yarns, or any other materials. The textile fabric 309 may terminate at the edges of the one or more apertures 306.

Figure 3B shows a door 311 for a vehicle. The door 311 is configured in the same way as door 301 illustrated in Figure 3A. However, the textile fabric 319 differs from the textile fabric 309 illustrated in Figure 3A in that textile fabric 319 does not terminate at the edges of the one or more apertures 306. Instead, the textile fabric 309 overlays the one or more apertures 306. The textile fabric 309 thus hides the one or more apertures 306. The one or more components 307 housed in the one or more apertures 306 are thus also hidden. The one or more components 307 are thus seamlessly integrated into the interior panel 311.

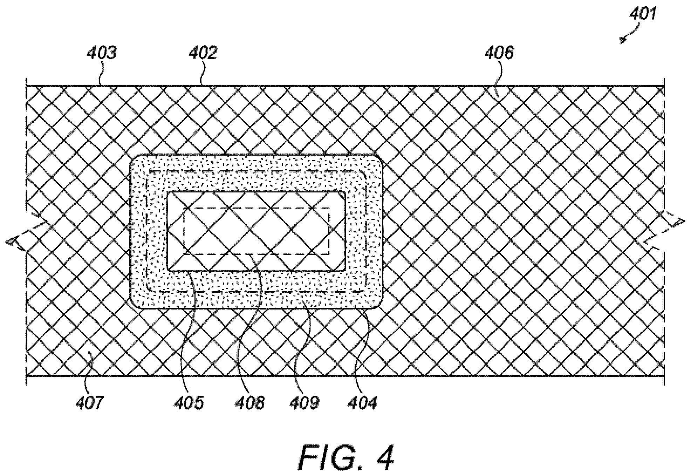

Figure 4 shows an interior panel 401 of a vehicle. The interior panel 401 could be a fascia panel. The interior panel 401 may be the vehicle dashboard. The interior panel 401 may be an interior panel for a door of the vehicle. The interior panel 401 may comprise a support panel 402. The support panel 402 may comprise a surface 403. The surface 403 may be configured to face towards an occupant cabin of the vehicle. The surface 403 of the support panel 402 may comprise one or more apertures 404. The one or more apertures 403 may be configured to house one or more components 405. The one or more components 405 may be speakers. Alternatively, the one or more components 405 may be lights. The one or more components 405 may be attached to the interior panel 401.

The interior panel 401 may also comprise a knitted fabric 406. The knitted fabric 406 may comprise a 'waffle' knit structure. A waffle knit structure if formed when the warp and weft threads of the knitted material 406 are interlaced in a way that creates small square ridges and hollows in the fabric in a regular pattern. The knitted fabric 406 may be formed using a yarn or monofilament. The yarn may be formed from a multiplicity of filaments. The yarn may comprise 50 to 150 filaments. Specifically, the yarn may comprise 90 to 100 filaments. The yarn may comprise 97 filaments. The filaments may be manufactured from a plastic or an aramid fibre. The filaments may be manufactured from natural fibres. The filaments may be manufactured from recycled polymers. The filaments may be manufactured from polyester. The knitted fabric 406 may have a grams per square metre (GSM) of between 600 and 1000. More specifically, the knitted fabric 406 may have a GSM of between 750 and 850. The knitted fabric may have a GSM of 800. The knitted fabric 406 may be a 3D knitted fabric. 3D knitting involves constructing 3D structures directly from the yarn. This differs from traditional 2D knitting which typically involves cutting and sewing individual pieces of 2D textile together to form a 3D shape. One of the major advantages of 3D knitting is that it creates less waste than traditional textile manufacture by removing the requirement to cut and sew together several 2D pieces of textile. Further, by removing the need to cut and sew together several 2D pieces of textile, 3D knitting can produce complex yet seam-free fabrics. As a result, the knitted fabric 406 may also be a single piece. The knitted fabric 406 may be attached to the support panel 402. The knitted fabric 406 may be attached to the support panel 402 around the periphery of the surface 403. The knitted fabric 406 may cover at least part of the support panel 402.

The knitted fabric 406 may comprise a first stitch density 407 in a first location. The knit structure in the first location may be a uniform waffle knit structure. The first location may overlay the surface 403 of the interior panel 401. The knitted fabric may comprise a second stitch density 408 in a second location. The second location may overlay the one or more apertures 404 in the surface 403 of the support panel 402. The first stitch density 407 may be higher than the second stitch density 408. The knitted fabric 406 may be more porous in the second location than in the first location. The knitted fabric 406 may comprise more spaces or holes through which air may pass in the second location than in the first location. The knitted fabric 406 may comprise more spaces or holes through which light may pass in the second location than in the first location.

It may be advantageous for the knitted fabric 406 to have a high stitch density in a location that overlays the surface 403 of the support panel 402. A knitted fabric having a stitch density of more than 20 stitches per square cm may be considered to have a high stitch density. A knitted fabric having a stitch density between 20 and 50 stitches per square cm may be considered to have a high stitch density. A knitted fabric having a stitch density between 20 and 40 stitches per square cm may be considered to have a high stitch density. The knitted fabric 406 may have a stitch density of 25 stitches per square cm in a location that overlays the surface 403 of the interior panel 401. A knitted fabric comprising a high stitch density may be thick and stiff. A knitted fabric with a high stitch density is generally better suited to protecting anything underlying a knitted fabric with a lower stitch density, providing the composition of the two materials is the same. For example, a knitted fabric with a high stitch density is likely to be tougher, more UV resistant and more puncture resistant, than its low stitch density counterpart. Thus, utilising the knitted fabric 406 with a high stitch density in a location that overlays the surface 403 of the interior panel 401 may extend the service life of the surface 403 of the interior panel.

It may be advantageous for the knitted fabric 406 to have a low stitch density in a location that overlays the one or more apertures 404 in the surface 403 of the support panel 402. A knitted fabric having a stitch density of fewer than 20 stitches per square cm may be considered to have a low stitch density. A knitted fabric having a stitch density of between 10 and 20 stitches per square cm may be considered to have a low stitch density. A knitted fabric having a stitch density of between 12 and 18 stitches per square cm may be considered to have a low stitch density. The knitted fabric 406 may have a stitch density of 15 stitches per square cm in a location that overlays the one or more apertures 404 in the surface 403 of the support panel 402. As above, the one or more apertures 403 may be configured to house one or more components 405. The one or more components 405 may be speakers. In this example, it is important that the sound emitted from the speakers is not muffled by the knitted fabric 406 overlaying the one or more apertures 404. The knitted fabric 406 is thus acoustically transparent in the location overlaying the one or more apertures 404 in the surface 403 of the support panel 402. That is, any sound emitted from the speaker can pass transparently through the knitted fabric 406. The knitted fabric 406 may also be more transparent to light in the first location than in the second location. The knitted fabric 406 may be arranged in such a way that light projected through the fabric in the second location projects an image into occupant cabin of the vehicle. The image may be a logo.

The knitted fabric 406 may also comprise a transition 409 between the first stitch density 407 and the second stitch density 408. The transition 409 may be gradual. The transition 409 may occur over a distance of between 15 and 25 stitches. The transition 409 may occur over a distance of between 0 cm and 3 cm. The transition 409 may occur over a distance of between 3 cm and 5 cm. The transition 409 may occur over a distance of between 5 cm and 10 cm. A gradual transition between the knitted fabric 406 that overlays the surface 403 of the interior panel 401 and the knitted fabric 406 that overlays the one or more apertures 404 in the surface 403 of the support panel 402 seamlessly integrates the components 405 into the interior panel 401. The transition 409 may alternatively be direct. In this case, the transition 409 occurs over a distance of less than 0.5 cm.

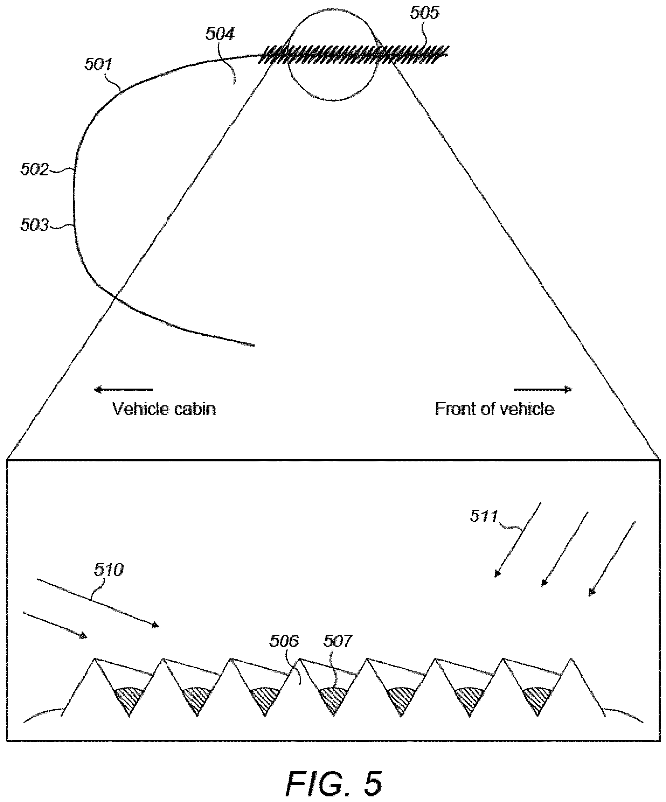

Figure 5 shows a side view of an interior panel 501 for a vehicle. The interior panel 501 could be a fascia panel. The interior panel 501 may be the vehicle dashboard. The interior panel 501 may be an interior panel for a door of the vehicle. The interior panel 501 may comprise a support panel 502. The support panel 502 may comprise a surface 503. The surface 503 may be configured to face towards the occupant cabin of the vehicle. The interior panel may also comprise a knitted fabric 504. The knitted fabric 504 may manufactured in the same way as knitted fabric 406 as described herein. That is, the knitted fabric 504 may be a 3D knitted fabric. The knitted fabric 504 may be attached to the support panel 502. The knitted fabric 504 may be attached to the support panel 502 around the periphery of the surface 503. The knitted fabric 504 may cover at least part of the support panel 502. The knitted fabric 504 may comprise a region of surface-relief 505. The entire knitted fabric 504 may comprise surface-relief 505. The region of surface relief 505 may comprise one or more areas of elevated stitching 506. The region of surface relief 505 may comprise one or more areas of depressed stitching 507. The depressed stitching 507 may be arranged so as to form a pattern. The elevated stitching 506 may be stitched using a first yarn. The depressed stitching 507 may be stitched using a second yarn. The elevated stitching 506 may be a first colour. The depressed stitching 507 may be a second colour. The first and second colours may be different. The first and second colours may be the same.

When viewed from a first direction 510, the one or more areas of depressed stitching 507 are obscured by the one or more areas of elevated stitching 506. The first direction 510 may be along a longitudinal direction of the vehicle. The first direction 510 may be from the perspective of the driver of the vehicle. The first direction 510 may be along a longitudinal direction of the vehicle centred on the driver seat. The first direction 510 may be at a viewing angle of less than 30 degrees from the surface of the interior panel. The first direction 510 may be at a viewing angle of less than 20 degrees from the surface of the interior panel.

When viewed from a second direction 511, the one or more areas of depressed stitching 507 are visible. The second direction 511 may be rotated from a longitudinal direction of the vehicle. The second direction 511 may be equivalent to a viewpoint of a person outside the occupant cabin of the vehicle. The second direction 511 may be at a viewing angle of greater than 30 degrees to the surface of the interior panel. The second direction 511 may be at a viewing angle of greater than 40 degrees to the surface of the interior panel.

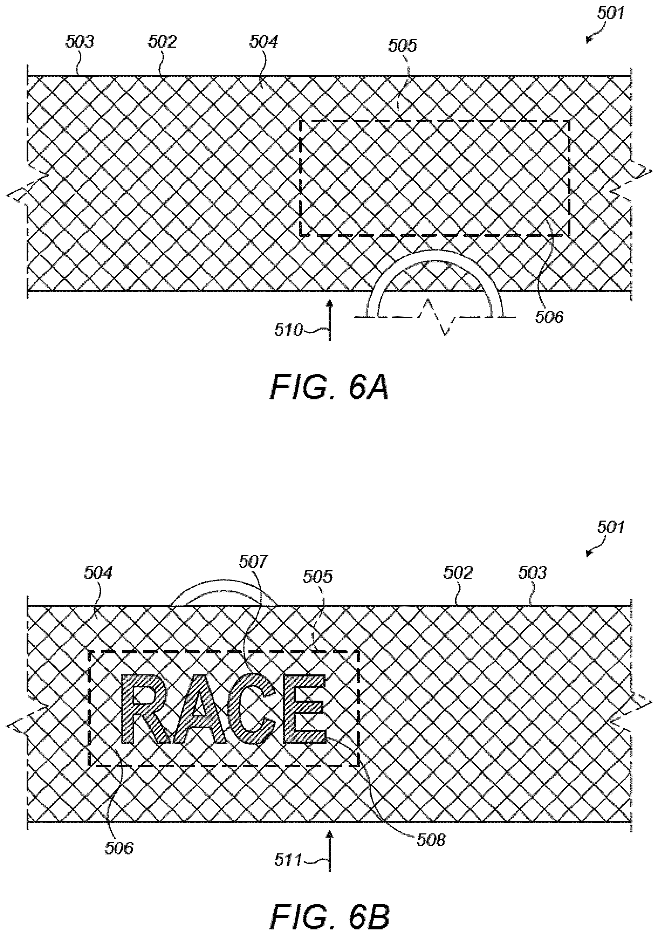

The arrangement of the interior panel 501 shown in Figure 6 is particularly advantageous as it allows for the knitted fabric 504 to suit the needs of multiple persons.

Figure 6A shows a first view of interior panel 501 when viewed from the first direction 510. When viewed from the first direction 510, the depressed stitching 507 of the knitted fabric 504 may not be visible. The appearance of the knitted fabric 504 may be uniform.

From the perspective of a driver of the vehicle, viewing the interior panel 501 in the first direction 510, the knitted fabric 504 may appear uniform. The knitted fabric 504 having a uniform appearance is beneficial to the driver of the vehicle as it does not detract from the road in front of the vehicle. The knitted fabric 504 having a uniform appearance in the first direction 510 thus enhances the safety of the vehicle. When viewed from the first direction 510, the uniform appearance of the knitted fabric 504 may create an anti-glare effect. Alternatively, the knitted fabric 504 may have a partly uniform appearance when viewed from the first direction 510. Alternatively, the knitted fabric 504 may appear patterned when viewed from the first direction 510.

Figure 6B shows a second view of interior panel 501 when viewed from the second direction 511. When viewed from the second direction 511, the depressed stitching 507 of the knitted fabric 504 may be visible. The appearance of the knitted fabric 504 may be patterned.

From the perspective of a person outside the vehicle cabin, viewing the interior panel 501 in the second direction 511, the knitted fabric 504 may appear patterned. The pattern 508 may take the form of a logo. The pattern 508 may take the form of an image. The pattern 508 may take the form of a slogan. Unlike the appearance from the perspective of the driver of the vehicle, safety considerations are not of paramount importance when considering the appearance of the knitted fabric 504 when viewed from the perspective of a person outside the vehicle cabin. From the second direction 511, it may be more important that the knitted fabric 504 appears aesthetically pleasing. The vehicle manufacturer may use this area for advertising.

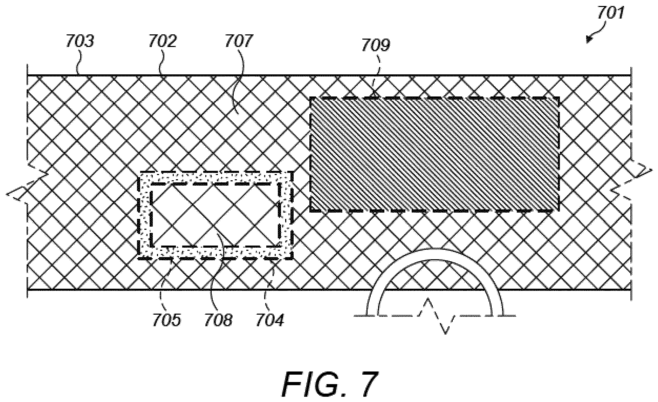

Figure 7 shows an interior panel 701 for a vehicle. The interior panel 701 could be a fascia panel. The interior panel 701 could be a vehicle dashboard. The interior panel 701 could be a vehicle door card. The interior panel 701 may comprise a support panel 702.

The support panel 702 may comprise a surface 703. The surface 703 may be configured to face towards an occupant cabin of the vehicle. The surface 703 of the support panel 702 may comprise one or more apertures 704. The one or more apertures 703 may be configured to house one or more components 705. The one or more components 705 may be attached to the interior panel 701. The interior panel may also comprise a knitted fabric 706. The knitted fabric 706 may comprise the features of knitted fabrics 406 and 504 described herein. That is, the knitted fabric 706 may comprise a first stitch density 707 in a first location and a second stitch density 708 in a second location. The knitted fabric 706 may also comprise an area of surface relief 709. The interior panel 701 may therefore benefit from the advantages described in relation to interior panel 401. That is, interior panel 701 may include seamlessly integrated components. The interior panel 701 may therefore also benefit from the advantages described in relation to interior panel 501. That is, interior panel 701 may enhance the safety of the vehicle.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the invention.

### ANNEX TO THE DESCRIPTION

1. An interior panel for a vehicle, the interior panel comprising:
   a support panel comprising a surface and one or more apertures in the surface; and
   a knitted fabric covering at least part of the support panel, the knitted fabric comprising: a first stitch density in a first location, the first location overlaying the surface of the interior panel; and a second stitch density in a second location, the second location overlaying the one or more apertures in the surface of the support panel.
2. The interior panel according to 1, wherein the first stitch density is higher than the second stitch density.
3. The interior panel according to 1 or 2, wherein the knitted fabric is more porous in the second location than in the first location.
4. The interior panel according to any of 1 to 3, wherein the knitted fabric comprises a transition between the first stitch density and the second stitch density, and the transition in stitch density is gradual.
5. The interior panel according to any of 1 to 3, wherein the knitted fabric comprises a transition between the first stitch density and the second stitch density, and the transition in stitch density is direct.
6. The interior panel according to any of 1 to 5, wherein the surface is configured to face towards an occupant cabin of a vehicle.
7. The interior panel according to any of 1 to 6, wherein the knitted fabric is attached to the support panel.
8. The interior panel according to 7, wherein the knitted fabric is attached to the support panel around a periphery of the surface.
9. The interior panel according to any of 1 to 8, wherein the one or more apertures of the interior panel are configured to house one or more components.
10. The interior panel according to 9, wherein the one or more components are speakers.
11. The interior panel according to 8 or 9, wherein the one or more components are attached to the interior panel.
12. The interior panel according to any of 1 to 11, wherein the interior panel is a vehicle dashboard.
13. The interior panel according to any of 1 to 12, where the interior panel is an interior panel for a door of the vehicle.
14. The interior panel according to any of 1 to 13, wherein the knitted fabric is made of a single piece.
15. The interior panel according to any of 1 to 14, wherein the knitted fabric is a 3D knitted fabric.
16. An interior panel for a vehicle, the interior panel comprising:
   a support panel; and
   a knitted fabric covering at least part of the support panel, the knitted fabric comprising a region of surface-relief comprising areas of elevated stitching and areas of depressed stitching such that when the knitted fabric is viewed from a first direction, the one or more areas of depressed stitching are obscured by the one or more areas of elevated stitching and when viewed from a second direction, the one or more areas of depressed stitching are visible.
17. The interior panel according to 16, wherein the vehicle comprises an occupant cabin and the interior panel is configured to be located inside the vehicle cabin.
18. The interior panel according to 16 or 17, wherein the vehicle comprises an occupant cabin, the interior panel is configured to be located inside the vehicle cabin, and the first direction is along a longitudinal direction of the vehicle.
19. The interior panel according to any of 16 to 18, wherein the vehicle comprises an occupant cabin and a driver seat, the interior panel is configured to be located inside the vehicle cabin, and the first direction is along a longitudinal direction of the vehicle centred on the driver seat.
20. The interior panel according to 18 or 19, wherein the first direction is at a viewing angle of less than 30 degrees from the surface of the interior panel.
21. The interior panel according to any of 16 to 20, wherein the vehicle comprises an occupant cabin, the interior panel is configured to be located inside the vehicle cabin, and the second direction is rotated from a longitudinal direction of the vehicle.
22. The interior panel according to any of 16 to 21, wherein the vehicle comprises an occupant cabin, the interior panel is configured to be located inside the vehicle cabin, and the second direction is being equivalent to a viewpoint of a person outside the vehicle cabin.
23. The interior panel according to any of 16 to 22, wherein the support panel comprises a surface that the knitted fabric covers, and the second direction being at a viewing angle of greater than 30 degrees to the surface of the interior panel.
24. The interior panel according to any of 16 to 23, wherein the depressed stitching of the knitted fabric is a first colour, and the elevated stitching of the knitted fabric is a second colour.
25. The interior panel according to 24, wherein the first and second colours are different.
26. The interior panel according to any of 16 to 25, wherein the interior panel is a vehicle dashboard.
27. The interior panel according to any of 16 to 26, wherein the knitted fabric has an anti-glare effect.
28. The interior panel according to any of 16 to 27, wherein the knitted fabric is made of a single piece.
29. The interior panel according to any of 16 to 28, wherein the knitted fabric is a 3D knitted fabric.
30. An interior panel for a vehicle, the interior panel comprising:
   a support panel comprising a surface and one or more apertures in the surface;
   a knitted fabric covering at least part of the support panel, the knitted fabric comprising:
      a first stitch density in a first location, the first location overlaying the surface of the interior panel; and a second stitch density in a second location, the second location overlaying the one or more apertures in the surface of the support panel wherein the knitted fabric is more porous in the second location than in the first location.; and
      a region of surface-relief comprising areas of elevated stitching and areas of depressed stitching such that when the knitted fabric is viewed from a first direction, the one or more areas of depressed stitching are obscured by the one or more areas of elevated stitching and when viewed from a second direction, the one or more areas of depressed stitching are visible.
31. The interior panel according to 30, wherein the first stitch density is higher than the second stitch density.
32. The interior panel according to 30 or 31, wherein the knitted fabric is more porous in the second location than in the first location.
33. The interior panel according to any of 30 to 32, wherein the knitted fabric comprises a transition between the first stitch density and the second stitch density, and the transition in stitch density is gradual.
34. The interior panel according to any of 30 to 33, wherein the knitted fabric comprises a transition between the first stitch density and the second stitch density, and the transition in stitch density is direct.
35. The interior panel according to any of 30 to 34, wherein the surface is configured to face towards an occupant cabin of a vehicle.
36. The interior panel according to any of 30 to 35, wherein the knitted fabric is attached to the support panel.
37. The interior panel according to 36, wherein the knitted fabric is attached to the support panel around a periphery of the surface.
38. The interior panel according to any of 30 to 37, wherein the one or more apertures of the interior panel are configured to house one or more components.
39. The interior panel according to 38, wherein the one or more components are speakers.
40. The interior panel according to 38 or 39, wherein the one or more components are attached to the interior panel.
41. The interior panel according to any of 30 to 40, wherein the interior panel is a vehicle dashboard.
42. The interior panel according to any of 30 to 41, wherein the knitted fabric is made of a single piece.
43. The interior panel according to any of 30 to 42, wherein the knitted fabric is a 3D knitted fabric.
44. The interior panel according to any of 30 to 43, wherein the vehicle comprises an occupant cabin and the interior panel is configured to be located inside the vehicle cabin.
45. The interior panel according to any of 30 to 44, wherein the vehicle comprises an occupant cabin, the interior panel is configured to be located inside the vehicle cabin, and the first direction is along a longitudinal direction of the vehicle.
46. The interior panel according to any of 30 to 45, wherein the vehicle comprises an occupant cabin and a driver seat, the interior panel is configured to be located inside the vehicle cabin, and the first direction is along a longitudinal direction of the vehicle centred on the driver seat.
47. The interior panel according to any of 30 to 46, wherein the first direction is at a viewing angle of less than 30 degrees from the surface of the interior panel.
48. The interior panel according to any of 30 to 47, wherein the vehicle comprises an occupant cabin, the interior panel is configured to be located inside the vehicle cabin, and the second direction is rotated from a longitudinal direction of the vehicle.
49. The interior panel according to any of 30 to 48, wherein the vehicle comprises an occupant cabin, the interior panel is configured to be located inside the vehicle cabin, and the second direction is being equivalent to a viewpoint of a person outside the vehicle cabin.
50. The interior panel according to any of 30 to 49, wherein the second direction is at a viewing angle of greater than 30 degrees to the surface of the interior panel.
51. The interior panel according to any of 30 to 50, wherein the depressed stitching of the knitted fabric is a first colour, and the elevated stitching of the knitted fabric is a second colour.
52. The interior panel according to 51, wherein the first and second colours are different.
53. The interior panel according to any of 30 to 52, wherein the knitted fabric has an anti-glare effect.

## Claims

1. An interior panel for a vehicle, the interior panel comprising:
a support panel; and
a knitted fabric covering at least part of the support panel, the knitted fabric comprising a region of surface-relief comprising areas of elevated stitching and areas of depressed stitching such that when the knitted fabric is viewed from a first direction, the one or more areas of depressed stitching are obscured by the one or more areas of elevated stitching and when viewed from a second direction, the one or more areas of depressed stitching are visible.

2. The interior panel of claim 1, wherein the vehicle comprises an occupant cabin and the interior panel is configured to be located inside the vehicle cabin.

3. The interior panel of claim 2, wherein the first direction is along a longitudinal direction of the vehicle.

4. The interior panel of claim 3, wherein the vehicle comprises a driver seat and the first direction is along a longitudinal direction of the vehicle centred on the driver seat.

5. The interior panel of claim 3 or claim 4, wherein the first direction is at a viewing angle of less than 30 degrees from a surface of the interior panel.

6. The interior panel of any of claims 2 to 5, wherein the second direction is rotated from a longitudinal direction of the vehicle.

7. The interior panel of claim 6, wherein the second direction is being equivalent to a viewpoint of a person outside the vehicle cabin.

8. The interior panel of claim 6 or 7, wherein the support panel comprises a surface that the knitted fabric covers, and the second direction being at a viewing angle of greater than 30 degrees to the surface of the interior panel.

9. The interior panel of any preceding claim, wherein the depressed stitching of the knitted fabric is a first colour, and the elevated stitching of the knitted fabric is a second colour.

10. The interior panel of claim 9, wherein the first and second colours are different.

11. The interior panel of any preceding claim, wherein the interior panel is a vehicle dashboard.

12. The interior panel of any preceding claim, wherein the knitted fabric has an anti-glare effect.

13. The interior panel of any preceding claim, wherein the knitted fabric is made of a single piece.

14. The interior panel of any preceding claim, wherein the knitted fabric is a 3D knitted fabric.

15. The interior panel of any preceding claim, comprising::
one or more apertures in a surface of the support panel;
the knitted fabric further comprising:
a first stitch density in a first location, the first location overlaying the surface of the interior panel; and
a second stitch density in a second location, the second location overlaying the one or more apertures in the surface of the support panel;
wherein the knitted fabric is more porous in the second location than in the first location.
